# EUROPÄISCHE PATENTSCHRIFT

(11) **EP 2 123 503 B1**
(45) Veröffentlichungstag und Bekanntmachung des Hinweises auf die Patenterteilung: **29.08.2012**
(21) Anmeldenummer: 09010050.4
(22) Anmeldetag: 05.03.2002
(51) Int. Cl.: B60N 2/07

(54) **Einrichtung für eine Sitzlängsverstellung, insbesondere innerhalb eines Kfz**
Device for horizontal adjustment of a seat, in particular inside a motor vehicle
Dispositif pour un siège réglable en longueur, en particulier à l'intérieur d'un véhicule automobile

(30) Priorität: 05.03.2001 DE 10110245
(43) Veröffentlichungstag der Anmeldung: 25.11.2009
(62) Teilanmeldung aus: 07003473.1
(73) Patentinhaber: IMS Gear GmbH, 78166 Donaueschingen (DE)
(72) Erfinder: Hofschulte, Wolfram H., 79848 Bonndorf (DE); Wöhrle, Michael, 78078 Niedereschach (DE); Probst, Frank, 78052 Obereschach (DE); Krimmel, Fred, 72458 Albstadt (DE)
(74) Vertreter: Patentanwälte Westphal, Mussgnug & Partner

(56) Entgegenhaltungen:
- WO-A-93/22156
- DE-A1- 19 815 283
- JP-U- 4 057 436
- JP-U- 4 115 934
- US-A- 5 150 872

## Beschreibung

Die Erfindung betrifft eine Einrichtung für eine Sitzlängsverstellung, insbesondere innerhalb eines Kfz, gemäß den Merkmalen des Anspruchs 1.

Eine hierzu nächstliegende Einrichtung ist zum Beispiel aus JP 04 057 436 U bekannt.

Solche Sitzlängsverstellungen sind zwischenzeitlich hinlänglich bekannt. Die Sitzlängsverstellungen weisen eine an einem Chassis festgelegte Unterschiene auf, innerhalb der eine Oberschiene, an der der Sitz befestigt ist, motorisch verfahrbar ist. Hierbei sitzt innerhalb der Oberschiene eine an der Unterschiene mit ihren jeweiligen Enden festgelegte Spindel, auf welcher ein mit der Oberschiene feststehend gekoppeltes Getriebe axial beweglich angeordnet ist. Der Sitz, der sich auf den beiden parallel zueinander angeordneten Oberschienen befindet, kann über eine motorische Einrichtung, die zwischen den Schienen sitzt, verfahren werden.

Beispiele für Einrichtungen zu Sitzlängsverstellungen sind in DE 36 40 197 Al, DE 42 08 948 C2, DE 196 42 665 C2, DE 198 15 283 Al, DE 198 44 817 Al, DE 199 44 690 Al, WO 95/16 585 und JP 04 115 934 U beschrieben worden.

Der Erfindung liegt die Aufgabe zugrunde, eine kompakte Sitzlängsverstellungseinrichtung anzugeben, bei der nur wenige Bauteile notwendig sind. Dabei sollen vorzugsweise im Falle eines Crashs die auftretenden Kräfte ohne weiteres aufgenommen werden können. Hierbei soll das aufzufindende Getriebe zur Längsverstellung des Sitzes die Rotationsbewegung des Antriebsmotors in eine Translationsbewegung umwandeln.

Eine weitere Aufgabe der vorliegenden Erfindung besteht darin, daß der Bauraum der Sitzlängsverstellungseinrichtung verhältnismäßig klein, vorzugsweise in der Breite nur 15 mm betragen soll. Darüber hinaus soll die zulässige Überragung der Oberschiene ebenfalls nicht allzu groß, maximal etwa 15 mm sein. Schließlich soll die erfindungsgemäße Einrichtung eine Festigkeitsforderung in beide Richtungen erfüllen, die bspw. 25000 N beträgt. Schließlich soll die erfindungsgemäße Einrichtung verhältnismäßig schnell, d. h. z. B. zwischen 15 und 25 mm/s über einen verhältnismäßig langen Verstellbereich von z. B. 300 mm verstellbar sein.

Diese Aufgabe wird durch eine Einrichtung mit den Merkmalen des Anspruchs 1 gelöst.

Weiterbildungen der Erfindung sind Gegenstand der hierauf bezogenen Unteransprüche.

In einer bevorzugten Ausbildung der Erfindung wird die Rotationsbewegung des Motors über eine Flexwelle, eine Schnecke, eine Spindel und eine Spindelmutter in die Translationsbewegung umgewandelt.

Zur Geräuschreduzierung empfiehlt es sich, die Spindel vorzugsweise exakt parallel zur Ober- und Unterschiene auszurichten.

In einer anderen Weiterbildung der Erfindung ist mindestens eines der Wandteile der Oberschiene mit einer Ausnehmung versehen, durch welche eine mit einem Antriebsmotor gekoppelte Flexwelle geführt ist.

Gemäß der Erfindung sind Seitenwandungen der Oberschiene als Schlitzbrücken ausgebildet und in das Innere der Oberschiene gedrückt, wobei sich das Getriebegehäuse an diesen Schlitzbrücken abstützt.

Das Getriebegehäuse besteht vorzugsweise aus zwei aus Kunststoff bestehenden Gehäuseschalen, welche durch Ultraschallverschweißung miteinander verbunden sind. Zweckmäßigerweise ist das Gehäuse, das durch Ultraschallverschweißung der beiden Gehäusehälften verbunden ist, nur auf Druckbelastung ausgelegt.

Eine klemmende Halterung des Getriebes wird bevorzugt durch gegenüberliegend in eine Aussparung der Oberschiene eingearbeitete L-förmig gebogene Metallbügel erreicht, zwischen denen das Getriebegehäuse mit Wandschrägen eingeschoben wird.

Die Spindelmutter und eine Stützscheibe, welche sich im Crashfall in Wandungen der Oberschiene abstützen kann, sind vorzugsweise einteilig bzw. einstückig ausgebildet. Beide bestehen bevorzugt aus Metall.

In einer anderen Weiterbildung ist koaxial auf die Spindelmutter ein Schneckenrad durch Kunststoffspritzen aufgebracht.

Die Funktionsweise der Sitzlängsverstellung ist folgende. Das Getriebe wird in eine U-förmige Sitzschiene eingebaut. Diese Sitzschiene besteht aus einer Unter- und einer Oberschiene, wie oben erwähnt. Die Unterschiene ist mit der Fahrzeugkarosserie verbunden, während die Oberschiene mit dem Fahrzeugsitz verbunden ist. Die Spindel selbst ist über zwei Schrauben mit der Unterschiene verbunden. Über die Translationsbewegung der Spindel-Spindelmutterpaarung erfolgt die Verstellung des Sitzes. Zur Verstellung eines Sitzes werden zwei Schienen und damit zwei Getriebe (ein linkes und ein rechtes) benötigt.

Die Hauptfunktion des Getriebes besteht in der Umwandlung der Rotationsbewegung in eine Translationsbewegung. Die Rotationsbewegung wird mittels eines Motors und der adaptierten Flexwelle über einen in der Getriebeschnecke integrierten Vierkant auf das Getriebe übertragen. Die Spindel wird über das umspritzte Schneckenrad mit einem definierten Übersetzungsverhältnis angetrieben. Die Umwandlung in die Translationsbewegung erfolgt über die Spindel-Spindelmutterpaarung. Beide Teile verfügen über ein Trapezgewinde.

Das Getriebe zeichnet sich insbesondere dadurch aus, daß es im Crashfall sehr hohe Kräfte aufnehmen kann. Das Gehäuse des Getriebes ist selbst nicht in der Lage die Kräfte bei einem Frontalcrash aufzunehmen. Solche Kräfte liegen bei etwa 24000 N. Im Crashfall wird bei dem Getriebe das Gehäuse des Getriebes zerstört und die Stützscheibe, die bevorzugt aus Metall besteht, kann beidseitig gegen die Kontaktflächen der Oberschiene anstoßen. Die Teile Oberschiene, Stützscheibe, Spindel, Spindelmutter und Unterschiene befinden sich bei der Einrichtung für eine Sitzlängsverstellung im Crashfall im Kraftfluß und können vorteilhafterweise die Crashkräfte aufnehmen.

Die Einrichtung für eine Sitzlängsverstellung zeichnet sich auch durch eine freie Positionierbarkeit der Getriebe auf der Schiene, der einstückigen Ausbildung Stützscheibe/Spindelmutter, eine drehende Mutter und eine stehende Spindel aus. Darüber hinaus ergibt sich mit der Einrichtung ein größerer Verfahrweg bei gleichen Einbaubedingungen.

Darüber hinaus zeichnet sich die Einrichtung bzw. das darin realisierte Getriebe durch folgende Merkmale aus:

Der getriebetechnische Verstellantrieb besteht nur aus vier bzw. fünf Bauteilen. Die Verzahnungsteile des Schneckengetriebes werden in einem Kunststoffgehäuse direkt gelagert. Auf gesonderte Lagerbauteile kann verzichtet werden. Die Gehäuse bestandteile werden durch Ultraschallverschweißung mit dem Hinblick auf spielfreie Funktion der Verzahnungsteile über einen individuellen Absenkweg verbunden und fixiert. Die Flexwellenanbindung stellt eine koaxiale Fixierung der rotierenden Flexwelle zur Antriebsschnecke sicher und wird vorzugsweise über eine Bajonettverbindung mit Schnappverschluß am Kunststoffgehäuse befestigt.

Das Getriebegehäuse wird mittels den oben genannten Schlitzbrücken bzw. Blechdurchzügen spielfrei aber elastisch mit der Sitzschiene verbunden und kann individuell im Montageprozeß angepaßt werden. Die Spindelmutter ist zugleich Schneckenrad und Stützscheibe. Die integrierte Stützscheibe entlastet im Falle eines Crashs das Kunststoffgehäuse von Crashkräften. Die Stützscheibe stützt sich dabei mittels Überstand an in der Sitzschiene angebrachter Ausnehmungen ab. Die Gewindespindel läßt sich für Montage und Raparaturzwecke nachträglich demontieren.

Die erfindungsgemäße Einrichtung zur Sitzlängsverstellung wird nachfolgend im Zusammenhang mit mehreren Figuren anhand eines Ausführungsbeispieles näher erläutert. Es zeigen:
- Fig. 1: eine perspektivische Darstellung der Unterschiene mit eingebauter Spindel sowie auf der Spindel sitzendem Getriebe in Draufsicht in perspektivischer Darstellung,
- Fig. 2: eine perspektivische Darstellung der Schiene von Fig. 1 mit eingesetzter Oberschiene bzw. Sitzschiene,
- Fig. 3: eine Detaildarstellung des in der Oberschiene gehaltenen Getriebes,
- Fig. 4: eine Stirnansicht der in Fig. 2 und 3 dargestellten Anordnung in Stirnansicht,
- Fig. 5: beispielhafte Maßangaben über den Verfahrweg der Oberschiene zur Unterschiene in mm,
- Fig. 6: eine Detailansicht der Endanschlagüberdeckung,
- Fig. 7: das Sitzschienenprofil im Getriebebereich,
- Fig. 8: die Oberschienenansicht mit aufgebrochenem Gehäuse,
- Fig. 9: eine Detaildarstellung der Getriebebefestigung zur Unterschiene,
- Fig. 10: einen Vorschlag für eine Montagefolge der erfindungsgemäßen Einrichtung,
- Fig. 11: der Bereich des Getriebes in vergrößerter Darstellung,
- Fig. 12: das Getriebe in Explosionsansicht,
- Fig. 13: eine Detailansicht des Flexwellenadapters,

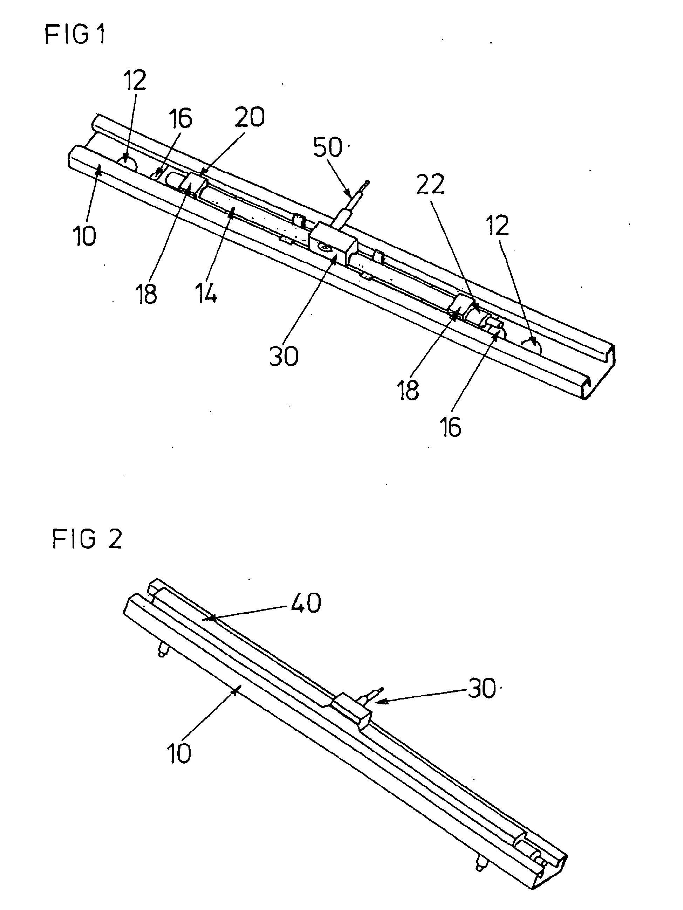

Wie aus Fig. 1 ersichtlich, sitzt innerhalb einer im Querschnitt U-förmigen Unterschiene 10, die endseitig über Befestigungsschrauben 12 am Chassis eines Fahrzeuges festgelegt ist, eine Spindel 14. Diese Spindel 14 ist an ihren beiden Enden über einen Endanschlag 18 in der Unterschiene 10 feststehend angeordnet. Die Verbindung zwischen Spindel 14 und Unterschiene 10 kann auf beliebige Weise erfolgen. Im dargestellten Ausführungsbeispiel ist diese Spindel 14 über ihre Endanschläge 18 mittels Befestigungsnieten 16 am Boden der Unterschiene 10 befestigt. An dem in Fig. 1 links dargestellten oberen Ende der Spindel 14 befindet sich eine Einstellmutter 20 und am rechts unten dargestellten Ende eine Anschlagmutter 22. Auf der Spindel ist ein Getriebe 30, das im Einzelnen noch erläutert werden wird, verfahrbar angeordnet. Das Getriebe 30 wird von einer Flexwelle 50 angetrieben. Bei rotierender Flexwelle bewegt sich das Getriebe auf der Spindel nach links oder rechts, je nachdem, in welche Richtung die Flexwelle 50 dreht.

Mit dem Getriebe 30 ist feststehend eine Oberschiene 40 gekoppelt. Auf der Oberschiene 40 ist ein Sitz, bevorzugt ein Sitz eines Kraftfahrzeugs, befestigt. Die Unterschiene 10 samt Oberschiene 40 und Getriebe 30 sind parallel zueinander unter einem zu verstellenden Sitz angeordnet. Zwischen jeweils einem solchen Schienenpaar sitzt ein Antriebsmotor, welcher die Flexwelle 50 jedes Getriebes 30 antreibt, so daß der Sitz nach vorn oder hinten bewegt werden kann.

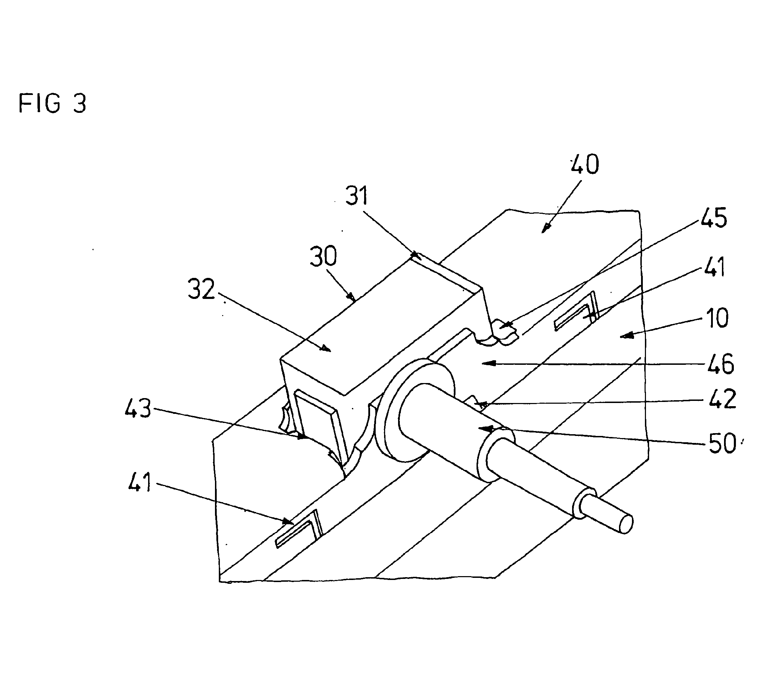

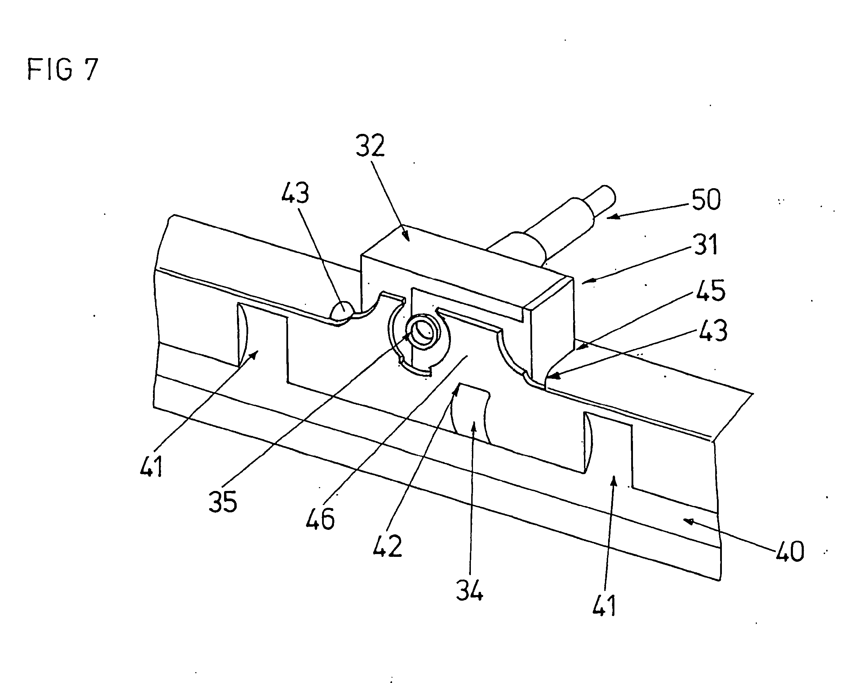

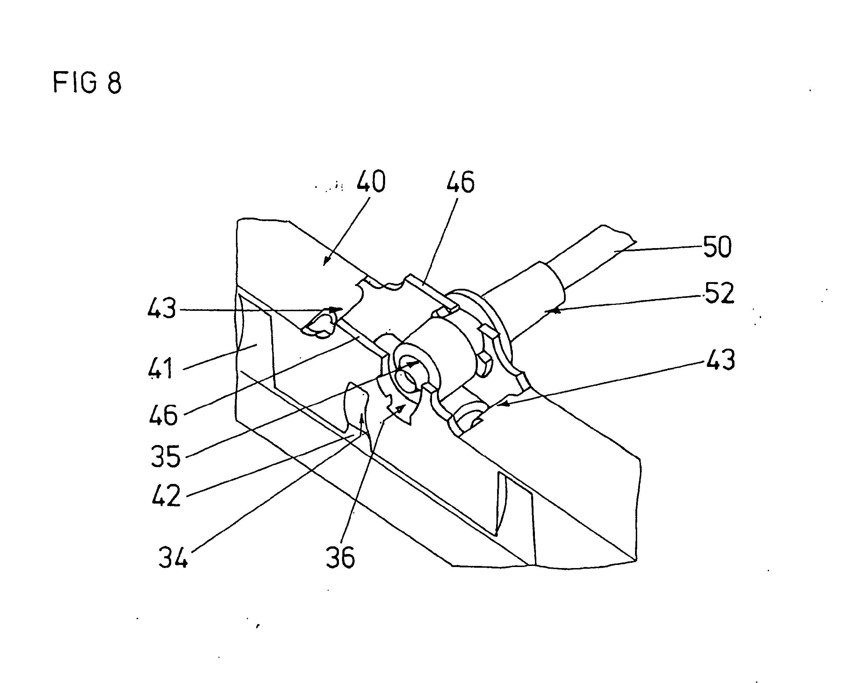

In Fig. 3 ist der Getriebesitz in der Oberschiene 40 vergrö-βert dargestellt. Eine ähnliche Darstellung, jedoch von der anderen Seite her gesehen, mit weggelassener Unterschiene, zeigt Fig. 7. Die Oberschiene 40 verfügt auf ihrem oberen Wandteil über eine Ausnehmung, in der das kastenförmige Gehäuse des Getriebes 30 sitzt. Das Getriebe 30 wird klemmend in dieser Ausnehmung 45 gehalten. Hierfür sind Wandabschnitte der oberen Wandung um 90° nach innen in die Ausnehmung 45 gebogen und dienen als Anschlagnase 43. Zwei dieser Anschlagnasen 43 befinden sich gegenüberliegend in Längserstreckung der Oberschiene 40. Diese Anschlagnasen 43 sind besonders deutlich in Fig. 8 zu erkennen. Darüber hinaus sitzt das kastenförmige Gehäuse des Getriebes 30 zwischen zwei parallel zueinander liegenden Wandabschnitten 46, die sich einstückig von den Seitenwandungen der Oberschiene 40 parallel nach oben erstrecken. Damit sitzt das Getriebe 30, das aus einem Gehäuseoberteil 31 und einem Gehäuseunterteil 32 gebildet ist und bevorzugt aus Kunststoff besteht, zwischen den beiden erwähnten Anschlagnasen 43 und den Wandabschnitten 46. Der dem Betracher zugewandte Wandabschnitt 46 ist mit einer Öffnung versehen, durch welche die Flexwelle 50 in das Innere des Gehäuses des Getriebes 30 ragt.

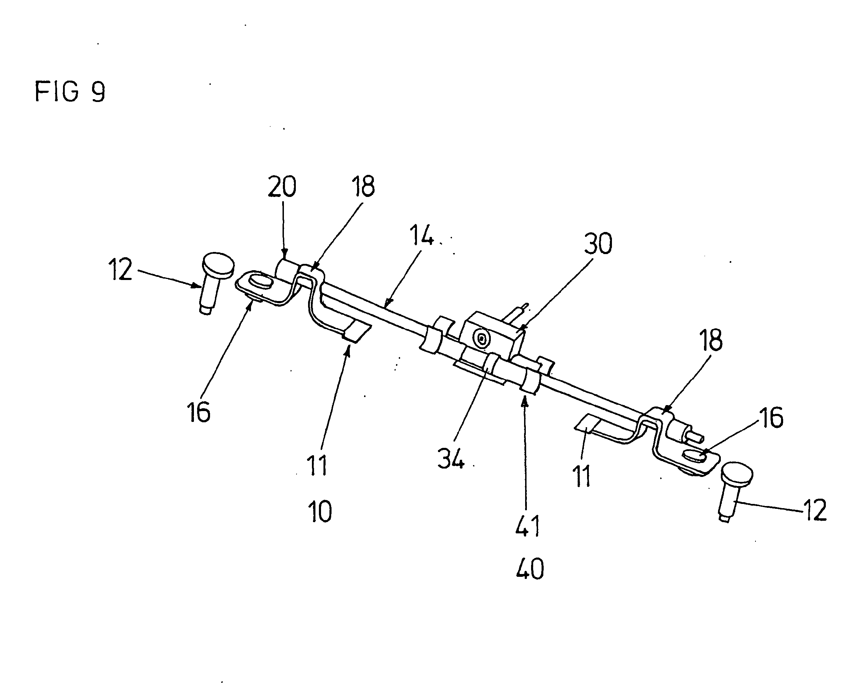

In den Seitenwandungen der Oberschiene 40 sind darüber hinaus sog. Schlitzbrücken 41 eingedrückt. Hierbei handelt es sich um Wandabschnitte, welche durch parallel zueinander in die Seitenwandungen der Oberschiene 40 eingearbeitete Schlitze in das Innere der Oberschiene 40 gedrückt sind. Jeweils zwei solcher Schlitzbrücken 41 befinden sich direkt gegenüberliegend zueinander. Diese Schlitzbrücken 41 verengen den Innenraum der Oberschiene 40 und dienen (vgl. Fig. 9) als Anschlag für das Gehäuseoberteil 31 und Gehäuseunterteil 32 des Getriebes 30. Desweiteren befinden sich gegenüberliegend in den beiden Seitenwandungen der Oberschiene 40 eine Ausnehmung 42, welche zwischen den jeweils angeordneten Schlitzbrücken 41 liegt. Diese Ausnehmung 42 dient zur teilweisen Aufnahme einer Stützscheibe 34 in noch zu erläuternder Art und Weise.

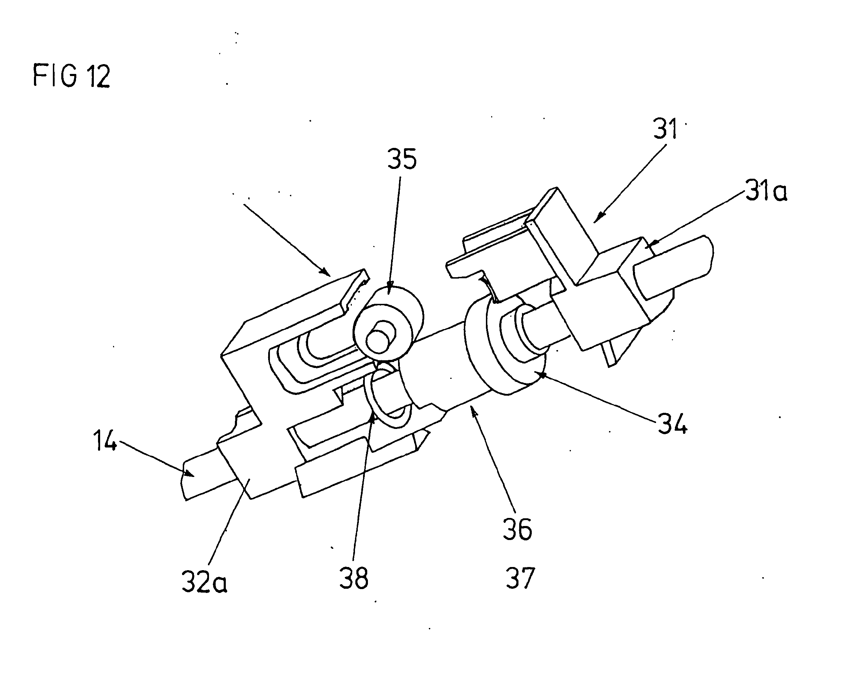

Die Flexwelle 50 ragt in das Innere des Gehäuses des Getriebes 30 über einen Flexwellenadapter 52. Am Ende dieses Flexwellenadapters 52 sitzt im Inneren des Getriebes 30 eine Schnecke 35, die mit einer Spindelmutter 36 in Eingriff steht. Diese Spindelmutter 36 ist mit einem Schneckenrad versehen. Wie insbesondere aus Fig. 12 besonders deutlich erkennbar, ist an diese Spindelmutter mit Schneckenrad einstückig eine Stützscheibe angeformt. Die Spindelmutter samt Schneckenrad und Stützscheibe bestehen vorzugsweise aus Metall. Zusätzlich kann noch eine Unterlegscheibe 38 innerhalb des Getriebes 30 vorgesehen sein. Das aus dem Gehäuseunterteil 32 und dem Gehäuseoberteil 31 bestehende Gehäuse des Getriebes 30 besteht aus Kunststoff und verfügt über kastenartige Teile 31a und 32a, durch welche die Spindel 14 geführt ist. Die Enden dieser kastenförmigen Teile 31a und 32a finden an den erwähnten Schlitzbrücken 41 ihren Anschlag. Beim Verfahren des Getriebes durch Antrieb über die Flexwelle 50 wird insgesamt durch die beschriebene Anordnung des Getriebes und der Oberschiene die Oberschiene entlang der Spindel und damit innerhalb der Unterschiene 10 mitgenommen.

Wie Fig. 9 zeigt, können auch in die Bodenwandung der Unterschiene Schlitzbrücken 11 eingearbeitet sein. Bei diesen Schlitzbrücken 11 handelt es sich ebenfalls um in Richtung Oberschiene gebogene bzw. eingedrückte Wandabschnitte, welche - wie Fig. 9 zeigt - vor den jeweiligen Endanschlägen 18 gegenüberliegend zu den Befestigungsnieten 16 angeordnet sind.

Wie die Darstellung von Fig. 9 deutlich zeigt, wird in einem Crashfall die auftretende Axialbeschleunigung des Sitzes sowohl durch die Schlitzbrücken 11 und 41 als auch durch die Stützscheibe im Zusammenspiel mit der Ausnehmung in der Oberschiene 40 abgefangen. Hierbei sind die Schlitzbrücken 11 und 41 jeweils paarweise angeordnet, so daß gleichgültig, ob die Beschleunigung nach vorne oder hinten im Crashfall geht, ein wirksames Abstützen in Einstelleinrichtung der Sitzverstellung gewährleistet ist. Zusätzlich nimmt die Stützscheibe 34 im Zusammenspiel mit der Ausnehmung der Oberschiene ebenfalls bei Beschleunigung in Vorwärts- oder Rückwärtsrichtung die auftretende Kraft auf.

Aus Fig. 9 ist darüber hinaus ebenfalls noch ersichtlich, daß die Endanschläge 18 durch U-förmige Bügel gebildet sind. Die Spindel 14 ragt durch die Längsschenkel dieser U-förmigen Bügel, wobei an den Enden dieser U-förmigen Bügel Haltelaschen vorgesehen sind, durch welche die Befestigungsnieten 16 geführt sind.

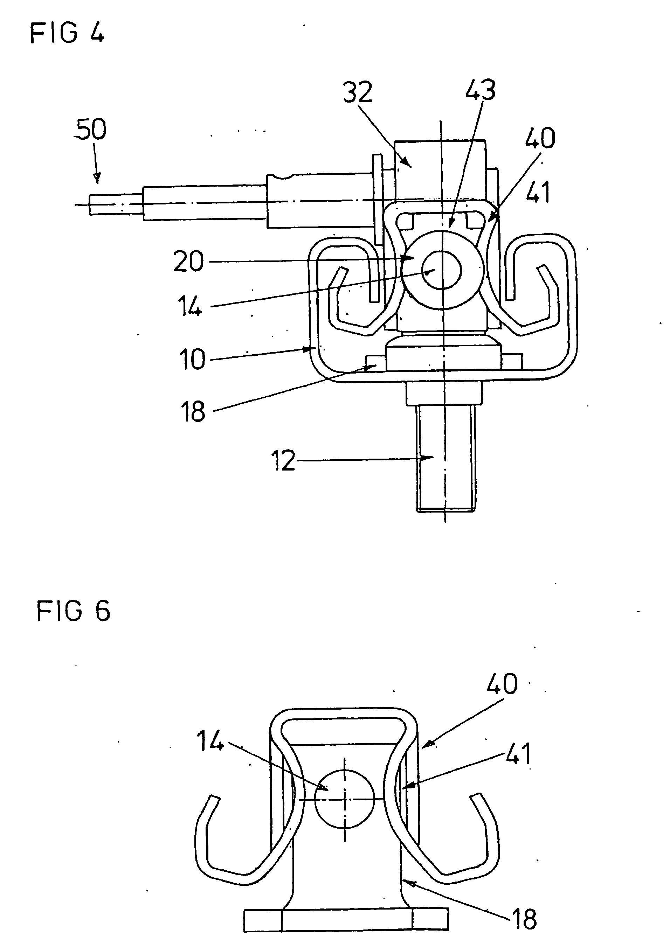

In Fig. 4 ist die in den Fig. 1-3 dargestellte Einrichtung in Stirnansicht der Sitzschiene geschnitten dargestellt. Die bereits erläuterten Bezugszeichen stehen wieder für die bekannten Teile. In der Darstellung von Fig. 4 ist besonders deutlich zu erkennen, daß die im Querschnitt U-förmig gestaltete Unterschiene 10 nach innen zurückgebogene Wandungsteile aufweist. Zwischen diese nach innen gebogenen Wandungsteile der Unterschiene 10 ragen - von den Seitenwandungen der Oberschiene 40 her gesehen - nach außen zurückgebogene Wandungsteile der Oberschiene 40. Durch diese Gestaltung der Oberschiene 40 und der Unterschiene 10 ist gewährleistet, daß ein seitliches Verrutschen der Oberschiene 40 und Unterschiene 10 ausgeschlossen ist. Darüber hinaus ist eine gewisse Führung gewährleistet.

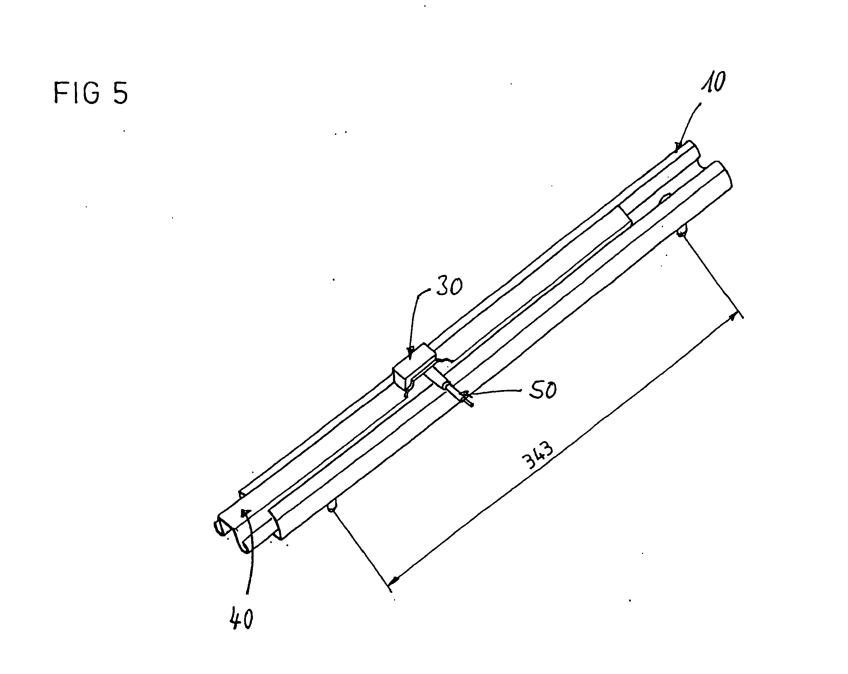

Fig. 5 verdeutlicht schematisch den möglichen Verfahrweg zwischen Oberschiene und Unterschiene. Im vorliegenden Ausführungsbeispiel ist als möglicher Verfahrweg 343mm vorgesehen.

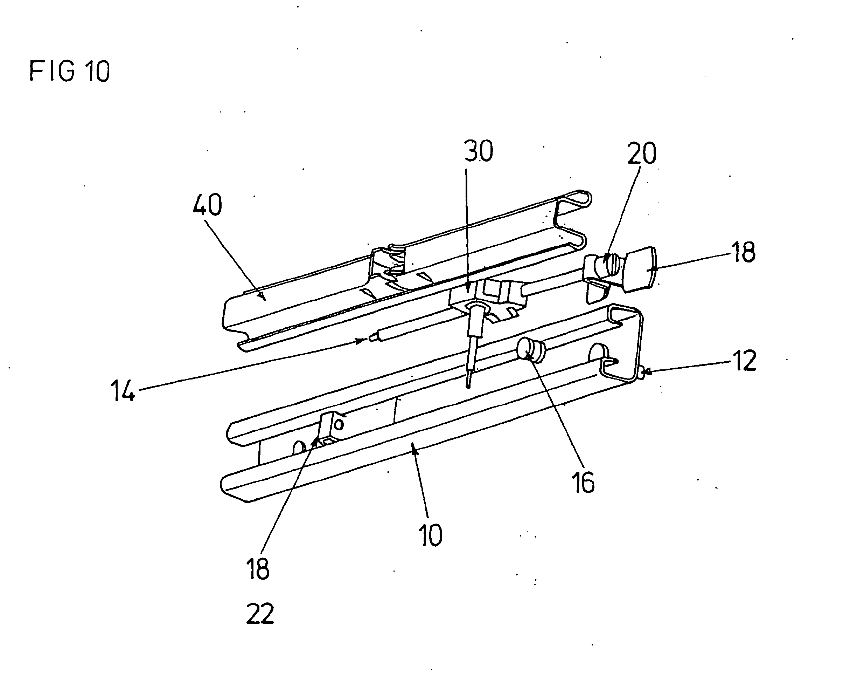

Fig. 6 zeigt in Schnittansicht besonders deutlich die in die Oberschiene 40 eingearbeiteten Schlitzbrücken, die merklich den Innenraum in der U-förmig gestalteten Oberschiene verengen und somit als Anschlag für das Getriebe 30 dienen. Fig. 10 zeigt die Oberschiene 40 und die Unterschiene 10 samt oben beschriebenen Einzelkomponenten in Explosionsdarstellung. Die bereits bekannten Komponenten sind mit den gleichen Bezugszeichen wie oben versehen.

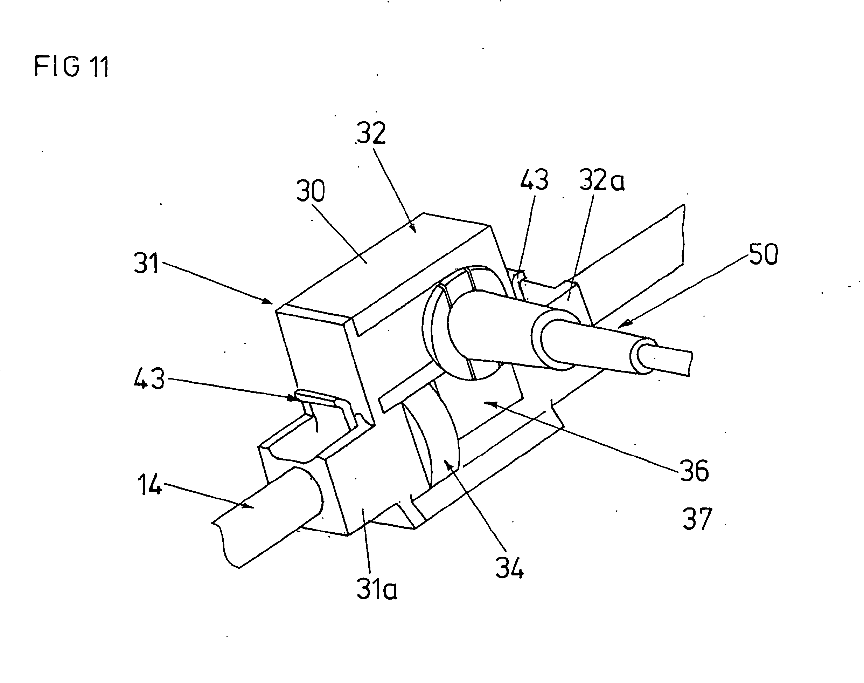

In Fig. 11 ist das Getriebe 30 mit seinem Gehäuseunterteil 32 und dem Gehäuseoberteil 31 samt kastenförmiger, einsückig angeformter Elemente im zusammengesetzen Zustand gezeigt. Auch in dieser Darstellung sind die von der oberen Wandung der Oberschiene 40 nach innen umgeklappten Anschlagnasen zu erkennen.

Die seitlich sich von dem Gehäuse des Getriebes 30 hervor streckende Stützscheibe 34. Die bereits erläutete Fig. 12 zeigt das Getriebe in Explositionsansicht. Hier ist die Spindelmutter 36 samt Schneckenrad und einstückig angeformter Stützscheibe 34 deutlich zu erkennen. Die Schnecke 35, die von der Flexwelle angetrieben wird, kämmt mit dem Schneckenrad 37. Durch diesen Antrieb bewegt sich das Getriebe entlang der Spindel 14.

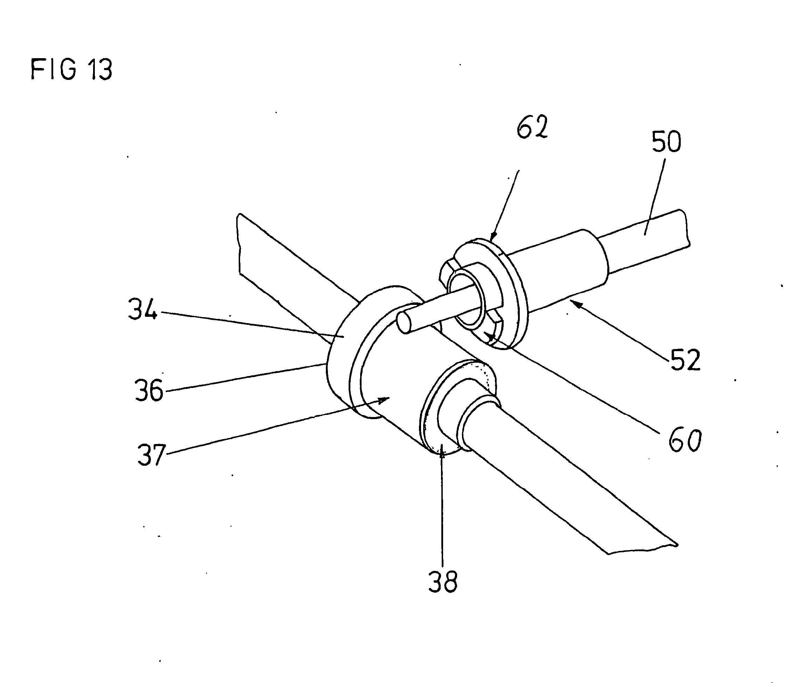

In Fig. 13 ist das Getriebe ohne Gehäuse nochmals deutlich dargestellt, wobei der besseren Deutlichkeit wegen die Schnecke auf der Flexwelle 50 weggelassen wurde. Die Flexwelle 50 ist in über den bereits erwähnten Flexwellenadapter 52 in das Gehäuse des Getriebes geführt. Ein Bajonettverschluss 60 samt Gripps 62 sorgt für eine geeignete Halterung der Flexwelle am Gehäuse des Getriebes 30.

### Bezugszeichenliste

- 10: Mutterschiene
- 11: Schlitzbrücke
- 12: Befestigungsschraube
- 14: Spindel
- 16: Befestigungsniete
- 18: Endanschlag

- 20: Einstellmutter
- 22: Anschlagmutter
- 30: Getriebe
- 31: Gehäuseoberteil
- 32: Gehäuseunterteil
- 34: Stützgetriebe
- 35: Schnecke
- 36: Spindelmutter
- 37: Schneckenrad
- 38: Unterlegscheibe
- 40: Oberschiene
- 41: Schlitzbrücke
- 42: Ausnehmung
- 43: Anschlagnase
- 45: Ausnehmung
- 46: Wandabschnitt
- 50: Flexwelle
- 52: Flexwellenadapter

## Patentansprüche

1. Einrichtung für eine Sitzlängsverstellung, insbesondere innerhalb eines Kfz, mit einer an einem Chassis festgelegten Unterschiene(10), innerhalb der eine Oberschiene(40), an der ein Sitz befestigt ist, motorisch verfahrbar ist, wobei innerhalb der Oberschiene(40) eine an der Unterschiene(10) mit ihren jeweiligen Enden festgelegte Spindel(14) sitzt, auf welcher ein mit der Oberschiene(40) feststehend gekoppeltes Getriebe(30) axial beweglich angeordnet ist, wobei
das Getriebe(30) klemmend in der Oberschiene(40) gehalten ist und ein Getriebegehäuse (31,32) aufweist, dessen gegenüberliegende Gehäusewandungen zwischen Seitenwandungen (46)der Oberschiene(40) liegen, wobei Schlitzbrücken (41) in die gegenüberliegenden Seitenwandungen(46) als Anschlag für das Getriebe(30) eingedrückt sind.

2. Einrichtung nach Anspruch 1,
**dadurch gekennzeichnet, dass** mindestens eine der Seitenwandungen (46) der Oberschiene(40) eine Ausnehmung aufweist, durch welche eine mit einem Antriebsmotor gekoppelte Flexwelle(50) geführt ist.

3. Einrichtung nach Anspruch 1 oder 2,
**dadurch gekennzeichnet, dass** das Getriebegehäuse zwei aus Kunststoff bestehende Gehäuseschalen(31,32) aufweist, welche durch Ultraschweißung miteinander verbunden sind.

4. Einrichtung nach einem der Ansprüche 1 bis 3,
**dadurch gekennzeichnet, dass** die klemmende Halterung des Getriebes(30) durch gegenüberliegend in eine Aussparung der Oberschiene(40) eingearbeitete L-förmig gebogene Metallbügel, zwischen denen das Getriebegehäuse mit Wandschrägen eingeschoben wird, erreicht ist.

5. Einrichtung nach einem der Ansprüche 1 bis 4,
**dadurch gekennzeichnet, dass** das Getriebe(30) eine auf der Spindel(14) aufsitzende Spindelmutter(36) mit Schneckenrad(37) und eine mit dem Schneckenrad(37) kämmende Schnecke(35) aufweist.

6. Einrichtung nach Ansprüche 5,
**dadurch gekennzeichnet, dass** an die Spindelmutter(36) eine Stützscheibe(34) einstückig angeformt ist.

7. Einrichtung nach Anspruch 6,
**dadurch gekennzeichnet, dass** die Spindelmutter(36) und die Stützscheibe(34) aus Metall bestehen.

8. Einrichtung nach Ansprüche 6 oder 7,
**dadurch gekennzeichnet, dass** koaxial auf die Spindelmutter(36) das Schneckenrad(37) durch Kunststoffspritzen aufgebracht ist.

9. Einrichtung nach Anspruch 3,
**dadurch gekennzeichnet, dass** die beiden Gehäuseschalen(31,32) des Getriebegehäuses in Axialrichtung aneinander gefügt sind.

10. Einrichtung nach einem der Ansprüche 1 bis 9,
**dadurch gekennzeichnet, dass** im Getriebegehäuse das Schneckengetriebe ohne die Verwendung gesonderter Lagerbauteile direkt gelagert ist.

## Claims

1. A device for the longitudinal adjustment of a seat, in particular inside a motor vehicle, with a lower rail (10) which is fixed to a chassis and inside which an upper rail (40) - to which a seat is fastened - is movable by a motor, wherein a spindle (14), which is fixed to the lower rail (10) at the respective ends thereof and on which a gear mechanism (30) coupled in a fixed manner to the upper rail (40) is arranged so as to be axially movable, is mounted inside the upper rail (40), wherein the gear mechanism (30) is held clamped in the upper rail (40) and has a gear mechanism housing (31, 32), the opposed walls of which are situated between lateral walls (46) of the upper rail (40), wherein slot bridges (41) are impressed in the opposed lateral walls (46) as a stop for the gear mechanism (30).

2. A device according to claim 1, **characterized in that** at least one of the lateral walls (46) of the upper rail (40) has a recess through which a flex-shaft (50) coupled to a drive motor extends.

3. A device according to claim 1 or 2, **characterized in that** the gear mechanism housing has two housing shells (31, 32) which consist of plastics material and which are joined to each other by ultra[sonic] welding.

4. A device according to any one of claims 1 to 3, **characterized in that** the clamped retention of the gear mechanism (30) is carried out by metal brackets which are bent into an L shape and are formed in an opposed manner in an aperture in the upper rail (40) and between which is inserted the gear mechanism housing with oblique wall portions.

5. A device according to any one of claims 1 to 4, **characterized in that** the gear mechanism (30) has a spindle nut (36) mounted on the spindle (14) and with a worm wheel (37) and a worm (35) meshing with the worm wheel (37).

6. A device according to claim 5, **characterized in that** a support disc (34) is formed integrally on the spindle nut (36).

7. A device according to claim 6, **characterized in that** the spindle nut (36) and the support disc (34) consist of metal.

8. A device according to claim 6 or 7, **characterized in that** the worm wheel (37) is formed coaxially on the spindle nut (36) by plastic injection.

9. A device according to claim 3, **characterized in that** the two shells (31, 32) of the gear mechanism housing are joined together in the axial direction.

10. A device according to any one of claims 1 to 9, **characterized in that** the worm gear is directly mounted in the gear mechanism housing without the use of separate bearing components.

## Revendications

1. Installation de réglage longitudinal d'un siège, en particulier dans un véhicule automobile comprenant un rail inférieur (10) fixé sur un châssis dans lequel un rail supérieur (40) sur lequel est monté un siège, peut être déplacé par un moteur,
installation dans laquelle
dans le rail supérieur (40) est montée une broche filetée (14) fixée au rail inférieur (10) par ses extrémités respectives, et sur laquelle est montée mobile en direction axiale une transmission (30) couplée de manière fixe au rail supérieur (40), la transmission (30) étant maintenue de façon serrée dans le rail supérieur (40) et comportant un boîtier de transmission (31, 32) dont les parois situées en regard sont positionnées entre des parois latérales (46) du rail supérieur (40), des pont fendus (41) constituant des butées pour la transmission (30) étant enfoncés dans les parois latérales (46) situées en regard.

2. Installation conforme à la revendication 1,
**caractérisée en ce qu'**
au moins l'une des parois latérales (46) du rail supérieur (40) comporte une découpe à travers laquelle passe un axe flexible (50) couplé à un moteur d'entraînement.

3. Installation conforme à la revendication 1 ou 2,
**caractérisée en ce que**
le boîtier de transmission comporte deux coquilles de boîtier (31, 32) réalisées en matière plastique qui sont reliées par soudage aux ultrasons.

4. Installation conforme à l'une des revendications 1 à 3,
**caractérisée en ce que**
le maintien serré de la transmission (30) est obtenu par des arceaux métalliques situés en regard, recourbés en forme de L, usinés dans une découpe du rail supérieur (40) et entre lesquels est inséré le boîtier de transmission avec des parois inclinées en forme de rampes.

5. Installation conforme à l'une des revendications 1 à 4,
**caractérisée en ce que**
la transmission (30) comporte un écrou (36) équipé d'une roue à vis (37) installé sur la broche filetée (14) et une vis (35) engrenant avec la roue vis (37).

6. Installation conforme à la revendication 5,
**caractérisée en ce qu'**
une rondelle d'appui (34) est réalisée en une seule pièce sur l'écrou (36).

7. Installation conforme à la revendication 6,
**caractérisée en ce que**
l'écrou (36) et la rondelle d'appui (34) sont en métal.

8. Installation conforme à la revendication 6 ou 7,
**caractérisée en ce que**
la roue à vis (37) est appliquée coaxialement sur l'écrou (36) par injection de matière plastique.

9. Installation conforme à la revendication 3,
**caractérisée en ce que**
les deux coquilles de boîtier (31, 32) du boîtier de transmission, sont emboîtées l'une dans l'autre en direction axiale.

10. Installation conforme à l'une des revendications 1 à 9,
**caractérisée en ce que**
la transmission à vis est montée directement dans le boîtier de transmission sans pièce de palier particulière.
